# EUROPÄISCHE PATENTSCHRIFT

(11) **EP 1 532 596 B1**
(45) Veröffentlichungstag und Bekanntmachung des Hinweises auf die Patenterteilung: **14.11.2007**
(21) Anmeldenummer: 03792384.4
(22) Anmeldetag: 20.08.2003
(51) Int. Cl.: G08B 21/02

(54) **AUFFIND-UND SCHUTZVORRICHTUNG FÜR PERSONEN UND VERFAHREN**
PERSONAL LOCATING AND PROTECTION DEVICE AND METHOD
DISPOSITIF DE RECHERCHE ET DE PROTECTION DE PERSONNES ET PROCEDE

(30) Priorität: 20.08.2002 DE 20213050 U
(43) Veröffentlichungstag der Anmeldung: 25.05.2005
(73) Patentinhaber: Schäfer, Michael, 56767 Höchstberg (DE); Mallmann, Jörg Peter, 56068 Koblenz (DE)
(72) Erfinder: Schäfer, Michael, 56767 Höchstberg (DE); Mallmann, Jörg Peter, 56068 Koblenz (DE)
(74) Vertreter: Wolff, Felix
(86) Internationale Anmeldenummer: PCT/EP2003/009202
(87) Internationale Veröffentlichungsnummer: WO 2004/019297

(56) Entgegenhaltungen:
- EP-A- 0 249 838
- EP-A- 0 519 630
- EP-A- 0 969 435
- DE-A- 4 131 947
- DE-A- 19 811 907
- GB-A- 2 314 986
- US-B1- 6 396 403

## Beschreibung

Die Erfindung bezieht sich auf eine Vorrichtung zum Auffinden und zum Schutz von Personen, wobei die Vorrichtung einen Sender umfasst und wobei die Vorrichtung Ortungsmittel zur Ermittlung des Ortes der Vorrichtung umfasst, wobei die Vorrichtung zu ihrer Befestigung am Körper der Person ein reversibel schließbares Befestigungsmittel umfasst und wobei der Sender ein Notsignal sendet, wenn das Befestigungsmittel unautorisiert geöffnet wird

Die GB 2 314 986 beschreibt ein Sende- und Empfangssystem zum Schutz von Kindern. Es besteht aus einem oder mehreren Sende- und Empfangsvorrichtungen für das bzw. die Kinder und einer Sende- und Empfangsvorrichtung für den Aufpasser. Die Vorrichtung für den Aufpasser sendet ein Funksignal zu der Vorrichtung für das Kind, die ihrerseits ein Antwortsignal sendet. Die Signale sind amplituden- und/oder frequenzmoduliert, so dass mittels Auswertung der Zeit zwischen den Signalen oder der Phasenverschiebung der Signale eine Berechnung der Distanz zwischen den Vorrichtungen möglich ist.

Aus der DE-OS 198 52 912 ist eine als Notsteuerung bezeichnete Vorrichtung bekannt, die aus einer stationären Zentraleinheit mit einem Empfänger und aus einem tragbaren Sender besteht. Falls sich die Lage des Senders bzw. die Lage der den Sender tragenden Person innerhalb eines oder mehrerer vorgegebener Zeitabschnitte nicht verändert, wird über die stationäre Zentraleinheit ein Notsignal an einen Auftraggeber, beispielsweise telefonisch, abgegeben.

Das direkte Absenden eines Notsignales durch die den Sender tragende Person ist mit dieser vorbekannten Vorrichtung nicht möglich bzw. nicht vorgesehen. Ferner wird es bei der vorbekannten Vorrichtung als nachteilig angesehen, dass die entsprechend ausgebildete Armbanduhr und damit der Sender in unbefugter Weise von der ihn tragenden Person abgenommen werden kann, ohne dass dies von der stationären Zentraleinheit bemerkbar und somit bei der Überwachung feststellbar ist.

Der stationären Zentraleinheit wird nämlich immer wieder in fälschlicher Weise übermittelt, dass sich die den Sender tragende Person in Bewegung befindet und damit alles in Ordnung ist.

Weiterhin ist es aus der DE 196 47 532 bekannt, zum Sichern einer Wegstrecke bzw. eines Standortes von zu schützenden Personen, insbesondere Kindern, solche Personen mit einem Notrufsender mit Signalgeber auszustatten, so dass ein vom Signalgeber ausgesandtes Notrufsignal von einem Notrufempfänger aufgenommen, an einer Empfangsstation angezeigt und/oder weitergeleitet werden kann.

Hierbei ist es nachteilig, dass der Ort der Vorrichtung nicht von der Vorrichtung selbst ermittelt werden kann, sondern dass es erst eines aufwändigen Peilvorganges bedarf, den Ort der Vorrichtung zu ermitteln, was in solchen Fällen dann schwierig ist, wenn eine Peilung aufgrund beispielsweise mangelnden Funkkontakts nicht möglich ist.

Weiterhin ist es mit den bekannten Vorrichtungen nicht möglich, andere Signale als Notsignale zu senden, so dass deren Verwendungsmöglichkeiten stark eingeschränkt sind.

Der Erfindung liegt die Aufgabe zugrunde, die bekannten Vorrichtungen so auszugestalten bzw. weiterzubilden, dass die Nachteile des Standes der Technik vermieden werden und insbesondere einer zentralen Empfangseinheit zusätzlich zu der Information, dass sich der Sender nicht mehr an der ihn normalerweise tragenden Person befindet, weitere Informationen zugänglich gemacht werden und eine bessere Ortung möglich ist.

Die Aufgabe wird durch eine Vorrichtung zum Auffinden und zum Schutz einer Person gemäß dem Patentanspruch 1 gelöst. Die Vorrichtung umfasst einen Sender und Ortungsmittel zur Ermittlung des Ortes der Vorrichtung, wobei die Vorrichtung zu ihrer Befestigung am Körper der Person ein reversibel schließbares Befestigungsmittel umfasst, wobei der Sender ein Notsignal sendet, wenn das Befestigungsmittel unautorisiert geöffnet wird und wobei der Sender unabhängig von der Aussendung des Notsignals ein Meldesignal aussendet. Hierdurch ist es beispielsweise möglich, dass einer zentralen Empfangseinheit Informationen zugänglich gemacht werden, die nicht lediglich einem aktuellen Notruf einer von der zentralen Empfangseinheit betreuten Vorrichtung entsprechen. Beispielsweise ist es dadurch möglich, dass Einbuchungsinformationen, Aktivierungsinformationen, Aktivitätsinformationen, Ausbuchungsinformationen, Ortsinformationen oder sonstige Informationen der Empfangseinheit zugänglich gemacht werden. Einbuchungsinformationen oder auch Aktivierungsinformationen sind beispielsweise vorteilhaft zur Übermittlung der Information, dass eine bestimmte Vorrichtung gerade aktiv bzw aktiviert ist und daher eine Person, an der diese Vorrichtung befestigt ist, überwacht werden muss. Aktivitätsinformationen sind beispielsweise vorteilhaft zur Übermittlung der Information, dass eine bestimmte Vorrichtung tatsächlich immer noch aktiviert ist und nicht beispielsweise wegen eines Ausfalls der Stromversorgung inaktiv ist. Ausbuchungsinformationen sind beispielsweise vorteilhaft zur Übermittlung der Information, dass die Überwachung einer bestimmten Person nicht mehr erforderlich ist. Ortsinformationen sind beispielsweise vorteilhaft zur Übermittlung des aktuellen Ortes der Vorrichtung.

Bevorzugt ist es weiterhin, dass der Sender das Meldesignal in regelmäßigen oder unregelmäßigen Zeitabständen aussendet. Dadurch ist es möglich, dass in der zentralen Empfangseinheit ständig bekannt ist, dass eine bestimmte Vorrichtung aktiv ist bzw. umgekehrt, dass in der zentralen Empfangseinheit über die Aktivität einer bestimmten erfindungsgemäßen Vorrichtung höchstens während eines sehr begrenzten Zeitraums Unsicherheit herrscht.

Weiterhin erfindungsgemäß übermittelt das Meldesignal eine Information über den momentanen Ort der Vorrichtung. Somit ist es möglich, beispielsweise schnell Hilfe an den Ort der Vorrichtung und damit auch an den Ort der zu schützenden Person zu bringen.

Ein weiterer Gegenstand der Erfindung ist ferner ein Verfahren zum Betrieb einer Vorrichtung, wobei die Vorrichtung am Körper einer Person mittels eines Befestigungsmittels durch Schließen eines Verschlusses befestigt wird, wobei die Vorrichtung einen Sender aufweist, wobei von dem Sender ein Notsignal an eine zentrale Empfangseinheit ausgesendet wird, wenn das Befestigungsmittel unautorisiert geöffnet wird, wobei von dem Sender unabhängig von der Aussendung des Notsignals ein Meldesignal ausgesendet wird. Hierdurch ist es beispielsweise möglich, dass einer zentralen Empfangseinheit Informationen zugänglich gemacht werden, die nicht lediglich einem aktuellen Notruf einer von der zentralen Empfangseinheit betreuten Vorrichtung entsprechen.

Weiterhin ist es bei dem erfindungsgemäßen Verfahren vorteilhaft, dass das Meldesignal in regelmäßigen oder unregelmäßigen Zeitabständen ausgesendet wird. Dadurch ist es beispielsweise möglich, dass in der zentralen Empfangseinheit ständig bekannt ist, dass eine bestimmte Vorrichtung aktiv ist.

Weiterhin ist es bei dem erfindungsgemäßen Verfahren vorteilhaft, dass ein Ausbleiben des Meldesignals von der zentralen Empfangseinheit als Notsignal interpretiert wird. Hierdurch ist es möglich, dass sofort dann Hilfe für die zu überwachende Person geholt wird, wenn die Funkverbindung abbricht. Ein solcher Fall kann insbesondere auch dadurch eintreten, dass die zu schützende Person gezwungen wird, die Vorrichtung in einen als Faraday'schen Käfig wirkenden Raumbereich zu bringen, wodurch die Aussendung eines Notsignals nicht möglich ist oder aber zumindest eine Funkverbindung zwischen der Vorrichtung und der zentralen Empfangseinheit nicht möglich ist.

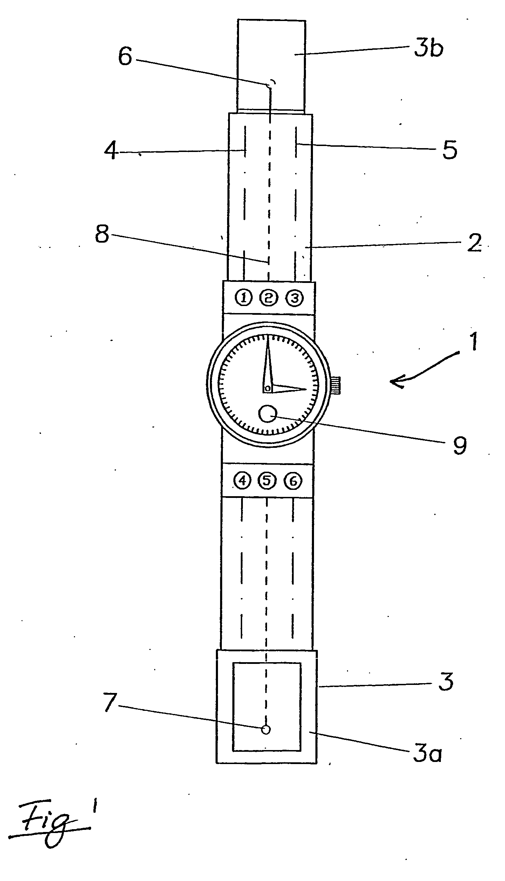

Die Erfindung wird nachfolgend anhand eines in der einzigen Figur der Zeichnung dargestellten Ausführungsbeispiels näher erläutert.

In der einzigen **Figur** der Zeichnung ist eine erfindungsgemäße Vorrichtung 1 beispielhaft in Form einer Armbanduhr 1 gezeigt, die mit einem Armband 2 mit einer Schließe 3 versehen ist. Über die Schließe 3 kann die Armbanduhr 1 in an sich bekannter Weise an einem Arm befestigt und wieder abgenommen werden. Dabei besteht die Schließe 3 aus einem Kuppelteil 3a und einem Steckerteil 3b, welches in das Kuppelteil 3a eingesteckt werden kann. Sowohl die Armbanduhr 1 als auch das Armband 2 sowie die Schließe 3 sind in besonderer Weise ausgebildet und mit einer Vorrichtung gemäß der Erfindung ausgerüstet. Das Armband 2 und die Schließe 3 sind lediglich Beispiele von Befestigungsmitteln, wobei die Schließe lediglich ein Beispiel für einen Verschluss des Befestigungsmittels ist.

In die Armbanduhr 1 - es kann aber auch das Armband 2 sein - ist ein Sender integriert, der einerseits ein an sich bekanntes, jedoch in der Zeichnung nicht besonders dargestelltes GPS-Modul sowie andererseits ein GSM-Modul besitzt. Die Stromversorgung des Senders und damit auch die Stromversorgung der GSM/GPS-Module erfolgt durch mindestens eine Batterie, die beispielsweise wiederaufladbar ausgebildet und in dem Armband 2 untergebracht ist. Das Global-Position-System-Modul (GPS-Modul) dient einer Positions- bzw. Ortsbestimmung, ist jedoch lediglich als ein Beispiel von Ortungsmitteln zu verstehen. Über das GPS-Modul ist immer feststellbar, wo sich die Armbanduhr 1 bzw. eine die Armbanduhr 1 tragende Person befindet, die aus besonderen Gründen ständig überwacht werden muß. Um dies zu gewährleisten, ist dem GPS-Modul eine Antenne 4 zugeordnet, die beispielsweise in dem Armband 2 untergebracht ist. Über diese Antenne 4 können die Positions- bzw. Ortsdaten über eine Funkverbindung - dies kann auch eine Mobilfunkverbindung sein - an einen an sich bekannten Empfänger, der eine Überwachungszentrale bildet, übermittelt werden, der entweder ortsfest angeordnet ist oder sich in einem Fahrzeug befindet.

Der Sender mit dem GPS-Modul ist der Armbanduhr 1 zugeordnet, die von einer Person getragen wird bzw. am Handgelenk derselben befestigt ist. Als Personen für das Tragen einer solchen Armbanduhr werden pflegebedürftige Menschen, Senioren, Kinder, Bergsteiger und Arbeiter, beispielsweise in Bergwerksanlagen ausgewählt, die aus persönlichen und/oder gesundheitlichen Gründen überwacht werden müssen. Dem Sender ist ein Global-Positioning-System-Modul, kurz GPS-Modul genannt, zugeordnet, welches über den Sender dem Empfänger der stationären Zentraleinheit über mindestens drei Satelliten durch eine sogenannte Kreuzpeilung die Daten per Funk übermittelt, wo sich gerade der Sender bzw. die den Sender tragende Person befindet. Diese Daten werden in der stationären Zentraleinheit gespeichert.

Das Global-System-for-Mobile-Communications-Modul (GSM-Modul) ermöglicht die Kommunikation mit dem Empfänger und besitzt dazu eine eigene Antenne 5, die ebenfalls in dem Armband 2 angeordnet ist. Das GSM-Modul kann auch zum Senden und Empfangen des Aktivier- und Freigabecodes verwendet werden. Das GSM-Modul ist dabei lediglich als ein Beispiel für eine Mobilfunkschnittstelle anzusehen. Es könnte sich erfindungsgemäß auch beispielsweise eine UMTS-Schnittstelle oder eine andere Funkschnittstelle handeln.

In dem Kuppelteil 3a bzw. dem Kupplungsteil 3a und dem Steckerteil 3b der Schließe 3 ist jeweils ein Kontakt 6,7 vorgesehen, die bei geschlossener Schließe 3 - das Steckerteil 3b befindet sich in dem Kupplungsteil 3a - einen Sicherheitsstromkreis 8 schließen, der sich ebenfalls im Armband 2 befindet. Durch das Schließen dieses Sicherheitstromkreises 8 wird nach dem Anlegen des Armbandes 2 eine Signalübertragung an den Empfänger automatisch aktiviert. Dies kann über eine Kontroll-LED 9 angezeigt werden. Ab diesem Zeitpunkt ist ein unautorisiertes Öffnen des Armbandes 2 und damit ein Entfernen der Armbanduhr 1 vom Handgelenk nicht mehr möglich. Dem Sender und damit den GSM/GPS-Modulen ist eine besondere Kennung zugeordnet, die es dem Empfänger ermöglicht, genau festzustellen, von welchem Sender Daten bzw. Signale kommen.

Sowohl bei einem unbeabsichtigten als bei einem gewaltsamen Öffnen des Armbandes 2 bzw. der Schließe 3 wird der Sicherheitsstromkreis 8 unterbrochen. Durch diese Unterbrechung wird das GSM-Modul sofort aktiviert und dem Empfänger wird ebenfalls sofort ein Signal bzw. Notsignal mit gleichzeitiger Orts- bzw. Positionsangabe übermittelt. Bedarfsweise kann ein Notsignal auch durch Betätigen eines besonderen Knopfes oder durch Öffnen der Schließe 3 durch die die Armbanduhr 1 tragende Person ausgelöst werden.

Die erfindungsgemäße Vorrichtung kann in normaler bzw. autorisierter Weise von seinem Träger, d.h. der zu überwachenden Person, abgenommen werden, wenn sie zuvor - insbesondere per Mobiltelefon oder per Festnetz - unter Angabe einer persönlichen Kennung bei der Überwachungszentrale abgemeldet wird. Hierdurch wird der elektrische und/oder elektromagnetische Verschluss bzw.
Verschlussmechanismus der Vorrichtung für eine Öffnung desselben freigegeben. Hierbei kann es vorgesehen sein - insbesondere wenn die zu überwachende Person ein Kind ist - dass eine Freigabe entweder durch die Eingabe eines Zahlencodes in die Vorrichtung erfolgt oder ohne die direkte Bedienung oder Betätigung (durch den Träger) der Vorrichtung (d.h. ausgehend beispielsweise von einem bestimmten Mobiltelefon oder ausgehend von einem bestimmten Festnetzanschluss) ausschließlich von einer besonderen Person oder Personengruppe, beispielsweise Eltern, durchgeführt werden kann.

Bei der Alternative, dass ein autorisiertes Abnehmen der Armbanduhr 1 durch die Eingabe eines vorher festgelegten Zahlencode erfolgt (der dem Empfänger beispielsweise übermittelt wird), sind an der Vorrichtung Eingabemittel oder Betätigungsmittel vorhanden. Stimmt der eingebene Zahlencode mit der beim Empfänger gespeicherten Identität des Senders überein, wird der Sicherheitsstromkreis 8 durch Signalübertragung an das GSM-Modul deaktiviert. Die Schließe 3 kann nun problemlos geöffnet und die Armbanduhr 1 abgenommen werden.

In Abänderung des erläuterten Ausführungsbeispieles ist es möglich, die erfindungsgemäße Vorrichtung auch in einem Armband, also ohne Uhr, unterzubringen oder in einem Halsband oder einem ähnlichen Teil anzuordnen. In einem bereits an einem Hals befestigten Halsband ist allerdings die Eingabe eines Zahlencodes oder die Betätigung einer Nottaste etwas schwierig. Ferner können die Schließe 3 und/oder der Schaltkontakt 7,8 anders ausgestaltet sein.

Das Armband 2 mit der Schließe 3 ist lediglich ein Beispiel für ein Befestigungsmittel, wodurch die erfindungsgemäße Vorrichtung am Körper der zu schützenden Person befestigt bzw. angebracht wird. Weiterhin ist die Schließe 3 lediglich ein Beispiel für ein Verschluss des Befestigungsmittels. Hierbei sind das Kuppelteil 3a und das Steckerteil 3b Beispiele für ein erstes und ein zweites Verschlussteil.

Erfindungsgemäß ist es auch möglich, die Antennen 4, 5 zu kombinieren und in einer Antenne zusammenzufassen.

Weiterhin in Abänderung des in der Figur gezeigten Ausführungsbeispiels ist es erfindungsgemäß vorgesehen, dass das Ortungsmittel anstelle oder kombiniert mit einem GPS-Modul ein Kreisel, insbesondere ein Kreiseltheodolit, umfasst. Hierdurch ist eine Ortung auch ohne das Vorhandensein einer Funkverbindung zu GPS-Satelliten möglich. Ein Kreiseltheodolit erlaubt es, die Position - d.h. die Ortsinformation - (im Anschluss an eine gewisse Kreiselzeit) jederzeit autonom, insbesondere beim Vorhandensein einer Information über das lokale geomagnetische Feld am Ort der Vorrichtung, zu ermitteln. Solche Kreiseltheodolite sind prinzipiell mittels Mikrosystemtechnik kostengünstig und in leichter und kompakter Bauweise herstellbar. Die Information über das lokale geomagnetische Feld wird in der Vorrichtung beispielsweise mittels eines Kompasses ermittelt.

Weiterhin ist es möglich, dass das Ortungsmittel anstelle oder kombiniert mit einem GPS-Modul eine Ortung über das Magnetfeld der Erde, d.h. also das geomagnetische Feld, durchführt. Hierzu ist es erfindungsgemäß vorgesehen, eine Ortung uber die Verknüpfung von geomagnetischen Koordinaten mit geographischen Koordinaten mittels eines Kreiseltheodoliten mit elektromagnetischer Abtastung durchzuführen. Eine weitere Möglichkeit für eine erfindungsgemäße Ortung besteht darin, eine Messung des örtlichen (Erd-) Magnetfeldes durchzuführen - insbesondere mittels einer Messvorrichtung, die den Hall-Effekt ausnutzt, oder auch mit einer ein SQUID (Supraconducting quantum interference device) umfassenden Messvorrichtung. Die zur Ortung notwendigen geographischen Koordinaten ergeben sich dann aus einem Abgleich des gemessenen Flussquantenfeldes mit kartierten Daten, beispielsweise mittels der Satelliten Champ, Oersted und/oder Magsat gemessen. Eine weitere Variante hinsichtlich der Ortung der Vorrichtung besteht darin, eine Ortung durch Störung des Erdmagnetfeldes durchzuführen.

Bei der bisher betrachteten Ausführungsform der Vorrichtung besteht die Überwachung, ob die Befestigungsmittel unautorisiert geöffnet wurden, in der Überwachung eines Stromkreises. Dies ist jedoch lediglich beispielhaft zu verstehen. In einer anderen Ausführungsform der erfindungsgemäßen Vorrichtung ist der Verschluss des Befestigungsmittels derart ausgebildet, dass das Vorhandensein oder das Nichtvorhandensein eines Magnetfeldes überwacht wird. Die Detektion, ob der Verschluss offen oder geschlossen ist, liegt also darin, ob ein Magnetfeld vorhanden ist oder nicht vorhanden ist bzw. darin ob ein Magnetfeld von einem Sensor erkannt wird oder nicht. Hierzu erzeugt ein erster Verschlusstell - beispielsweise das Kupplungsteil 3a - ein Magnetfeld (bzw. es enthält der erste Verschlussteil einen Permanentmagneten), das von einem zweiten Verschlussteil - beispielsweise das Steckerteil 3b - detektierbar ist. Die Detektion des Magnetfeldes erfolgt beispielsweise durch Nutzung des Zeeman-Effekts bei Elementen der seltenen Erden und die Aufspaltung der Spektrallinien solcher Elemente im Magnetfeld. Hierzu ist beispielsweise ein Halbleiterlaser mit einem Detektor in das erste oder zweite Verschlussteil eingebaut, so dass sich mit einem Kristall, der beispielsweise ein Lanthanid umfasst, die aufgespaltenen Spektrallinien messen lassen. Durch Modulation der Stärke des Magnetfeldes lässt sich damit ein individueller Code, beispielsweise ein 112-Bit-Code, generieren. Dies geschieht beispielsweise mittels einer Koppelung eines solchen Detektorsystems mit einer funkgesteuerten Frequenz für das Magnetfeld, so dass sich (aufgrund des individuellen Codes) ein individueller Verschluss ergibt. Hierbei reicht erfindungsgemaß bereits die Aufspaltung in eine Doppellinie, wobei eine Aufspaltung in drei Linien in der Regel ebenfalls auftritt.

Zur Erschwerung eines Lösens bzw. eines Öffnens des Befestigungsmittels - insbesondere bei einer "magnetischen" Überwachung des Verschlusses - ist es erfindungsgemäß in einem weiteren bevorzugten Ausführungsbeispiel vorgesehen, dass das Armband 2 (oder die nicht dargestellte Kette) aus einem besonders harten und/oder zähen Material besteht, insbesondere aus Federstahl.

Die Erfindungsgemäße Vorrichtung kann in einem weiteren nicht dargestellten Ausführungsbeispiel einen Speicher umfassen, wobei es erfindungsgemäß insbesondere vorgesehen ist, einen magnetooptischen Speicher zum Ablegen von Daten unter Anwendung elektromagnetischer Kräfte und nichtlinearer Materialeigenschaften zu verwenden. Für magnetooptische Aufzeichnungen werden dabei erfindungsgemäß insbesondere Materialien verwendet, die Kombinationen von Elementen der seltenen Erden (insbesondere Lanthanidelemente) und von Übergangsmetallen darstellen. Zur Speicherung von Daten in solche magnetooptische Speicher und/oder zum Auslesen von Daten aus solchen magnetooptischen Speichern ist es erfindungsgemäß insbesondere vorgesehen, den Kerr-Effekt und oder den Faraday-Effekt anzuwenden.

Erfindungsgemäß sendet die Vorrichtung an die zentrale Empfangseinheit insbesondere in regelmäßigen oder in unregelmäßigen Zeitabständen ein Meldesignal aus. Die Zeitabstände können dabei gleichgroß oder verschiedengroß oder variierend vorgesehen sein. Es wird im Folgenden von einer ständigen bzw. einer quasiständigen Funkverbindung zwischen der Vorrichtung und der zentralen Empfangseinheit gesprochen, wenn die Zeitabstände der Meldesignale nicht größer als einige Sekunden bis einige Minuten sind. In dieser Zeit ist es in der Regel nicht möglich, dass zu überwachende Personen beispielsweise entführt werden können. Es ist erfindungsgemäß insbesondere vorgesehen, dass die zentrale Empfangseinheit auch ein Ausbleiben eines erwarteten Meldesignals als Notruf wertet. Zumindest ist es erfindungsgemäß vorgesehen, dass bei einem Ausbleiben von mehreren aufeinanderfolgenden zwar erwarteten, jedoch nicht empfangenen Meldesignalen eine Notrufaktion gestartet wird als wäre tatsächlich ein Notruf von der Vorrichtung empfangen worden. Hierdurch ist es vorteilhaft möglich, die zu schützenden Personen auch für solche Fälle zu schützen, bei denen eine Funkverbindung zwischen der Vorrichtung der zentralen Empfangseinheit durch gewaltsamen Eingriff verhindert wird, beispielsweise durch einen Transport der zu schützenden Person (mit der erfindungsgemäßen Vorrichtung) in einem als Faraday-Käfig wirkenden Kofferraum eines Fahrzeugs.

Die von der erfindungsgemäßen Vorrichtung abgestrahlten bzw. gesendeten Meldesignale umfassen insbesondere eine Ortsinformation über den momentanen Ort der Vorrichtung. Diese (zeitlich früheren) Ortsinformationen können beim Ausbleiben eines Funkkontakts zwischen der Vorrichtung und der zentralen Empfangseinheit zur Extrapolation der Bewegungsrichtung und/oder der Bewegungsgeschwindigkeit verwendet werden. Dies ist besonders für Funklöcher wichtig, in denen keine Verbindung zwischen der Vorrichtung und der zentralen Empfangseinheit besteht.

Erfindungsgemäß sendet die Vorrichtung weiterhin beim Verlust des Kontakts mit der zentralen Empfangseinheit ein Rundumsignal und/oder ein besonders starkes Signal in der Hoffnung, dass ein letztes Mal ein Kontakt zustande kommt.

Erfindungsgemäß ist es weiterhin möglich, dass - insbesondere um die Anzahl von Fehlalarmen zu verringern - ein Abgleich mit Karten von Bauwerken (wie zum Beispiel Tunneln) und/oder Funklöchern vorgenommen wird, so dass von der zentralen Empfangseinheit gar kein Meldesignal der Vorrichtung erwartet wird, wenn sich die Vorrichtung (mit großer Wahrscheinlichkeit) in einem Funkloch und/oder einem Bauwerk befindet. Hierbei ist es beispielsweise auch möglich, dass vor der Aktivierung eines Alarms eine Wartezeit eingehalten wird.

Eine Alternative zu einer Funkverbindung zur Übermittlung von Informationen von der Vorrichtung zur zentralen Empfangseinheit kann erfindungsgemäß auch in der lokalen Störung des Erdmagnetfeldes durch die Vorrichtung liegen, wobei eine solche lokale Störung von einem besonders empfindlichen Satelliten oder einer sonstigen Messeinrichtung erfasst und dadurch erkannt wird. Hierdurch ist es erfindungsgemäß auch möglich, dass eine Ortung in einem Bauwerk und/oder einem Tunnel möglich ist.

Erfindungsgemäß wird die Vorrichtung nach der Befestigung an der zu schützenden Person durch eine Datenübertragung über den Sender (Sende-/Empfangsmodul) der Vorrichtung an die Überwachungszentrale (zentrale Empfangseinheit) automatisch aktiviert. Ab diesem Zeitpunkt ist ein unautorisiertes Öffnen, des Befestigungsmittels bzw. des Schutzsystems ohne eine Alarmauslösung und eine Positionsübermittlung an die Überwachungszentrale nicht mehr möglich. Jede einzelne erfindungsgemäße Vorrichtung ist durch eine eindeutige Nummer jeweils nur einer einzigen Person zugeordnet und eindeutig identifizierbar, beispielsweise über die Seriennummer.

Durch die Unterbrechung eines Stromkreises (bzw. durch die Nichtdetektion eines Magnetfeldes am Verschluss des Befestigungsmittels) bei unautorisierter bzw. unautorisierter Öffnung des Befestigungsmittels wird ein Notrufsignal per Datenübertragung gemeldet. Zusätzlich ist die Auslösung eines manuellen Alarms möglich, was erfindungsgemäß jedoch nur für zu überwachende Erwachsene möglich sein kann. Kinder können erfindungsgemäß vorzugsweise in einem zuvor definierten Bereich überwacht werden, was erfindungsgemäß selbstverständlich auch für Erwachsene möglich ist. Wird der definierte örtlich begrenzte Bereich verlassen (Ortsüberschreitung), wird der zentralen Empfangseinheit, die als Überwachungszentrale agiert, ein Alarmeingang mit Datenübertragung (insbesondere der Ortsinformation der Vorrichtung) gemeldet. Eine entsprechende Software ist bei der Überwachungszentrale, insbesondere auf einem Rechner, installiert.

Bei einer Alarmauslösung - sei es durch Empfang (an der zentralen Empfangseinheit) eines expliziten Notrufsignals der Vorrichtung oder aber eines impliziten Notrufsignals, d.h. durch Interpretation des Ausbleibens eines oder mehrerer Meldesignale, oder aber durch Ortsüberschreitung - ist erfindungsgemäß vorgesehen, beispielsweise folgende Eskalationsstufen zu durchlaufen: Es wird von der Zentrale zunächst bei einer (zuvor natürlich vereinbarten und definierten) Telefonnummer einer ersten Bezugsperson (beispielsweise ein Elternteil) der zu schützenden Person (beispielsweise ein Kind) angerufen und die erste Bezugsperson über die Alarmsituation, d.h. insbesondere welcher der Fälle der Alarmauslösung vorliegt, informiert. Falls die erste Bezugsperson nicht erreichbar sein sollte, wird von der Zentrale eine zweite zuvor vereinbarte Telefonnummer einer zweiten Bezugsperson (beispielsweise ein anderes Elternteil) der zu schützenden Person informiert. Falls eine Kontaktaufnahme innerhalb einer vorgegebenen Zeitspanne nicht möglich sein sollte, wird eine dritte Stelle, beispielsweise die Polizei oder die Feuerwehr, informiert. Die Bezugspersonen können beide (durch eine entsprechende Informationsübermittlung an die Zentrale) entweder den Alarmvorgang abbrechen (beispielsweise, wenn klar ist, dass keine Gefahrensituation vorliegt, weil die zu schützende Person in Sichtweite ist) oder aber den Alarmvorgang vollständig auslösen. Bei einer Alarmauslösung mit Information einer dritten Stelle sind gegebenenfalls weitere Eskalationsstufen möglich.

Erfindungsgemäß können selbstverständlich auch mehr als zwei Bezugspersonen (bzw. anzurufende Telefonnummern) vorgesehen sein. Anstelle eines Anrufs ist selbstverständlich auch die Übersendung einer Nachricht, beispielsweise eine E-Mail-Nachricht, eine SMS-Nachricht (short message system im GSM- oder UMTS-Netz), eine MMS-Nachricht oder dergleichen, möglich. Weiterhin kann es vorgesehen sein, dass beide Bezugspersonen gleichzeitig angerufen/informiert werden, so dass ein Zeitverlust bis zur Reaktion von Polizei bzw. Feuerwehr möglichst reduziert wird. Die Zwischenschaltung der Kontaktperson dient der Vermeidung von möglichen Fehlalarmen, die insbesondere dadurch generiert werden, dass in der Zentrale lediglich ein Ausbleiben der Meldesignale als Notruf interpretiert wird. Es kann daher auch vorgesehen sein, dass abhängig vom Grund der Alarmauslösung (Notrufsignal, Ausbleiben des Meldesignals, Ortsüberschreitung) die Eskalationsstufe der Information von Bezugspersonen übersprungen wird oder nicht. Insbesondere beim Empfang eines expliziten Notrufsignals kann eine sofortige Alarmauslösung mit der Information von dritten Stellen vorteilhaft sein.

Zur Erkennung, ob die Vorrichtung 1 vom Körper der zu schützenden Person getrennt wurde oder nicht, kann auch ein Körpersensor in die Vorrichtung 1 integriert sein, beispielsweise zur Messung der Pulsfrequenz, der Körpertemperatur oder dergleichen.

Die Vorrichtung trägt erfindungsgemäß insbesondere eine Beleuchtungseinrichtung, beispielsweise eine LED, bzw. umfasst eine akustische Wam/Signalisierungseinrichtung, die verschiedene Betriebszustände der Vorrichtung signalisieren, wie beispielsweise eine kritisch niedrige Kapazität des Energieträgers, eine erfolglos versuchte Funkverbindung zwischen der Vorrichtung und der Überwachungszentrale zur Übersendung eines Meldesignals oder zur Übersendung eines Notrufsignals und eine Aktivierung der Vorrichtung durch die Überwachungszentrale.

Der Grundgedanke der Erfindung ist ebenfalls auf den Schutz oder die Überwachung von Gegenständen, insbesondere wertvoller Schmuck, Automobile oder dergleichen, übertragbar. Hierzu wird die erfindungsgemäße Vorrichtung - ggf. ohne Betätigungs- und/oder Signalisierungsmittel - an dem zu schützenden Gegenstand befestigt und/oder unlösbar mit diesem verbunden.

## Patentansprüche

1. Vorrichtung (1) zum Auffinden und zum Schutz einer Person, wobei die Vorrichtung (1) einen Sender umfasst, wobei die Vorrichtung (1) zu ihrer Befestigung am Körper der Person ein reversibel schließbares Befestigungsmittel (2, 3) umfasst, wobei der Sender ein Notsignal sendet, wenn das Befestigungsmittel (2. 3) unautorisiert geöffnet wird, **dadurch gekennzeichnet, dass**
- die Vorrichtung (1) ein Ortungsmittel zur Ermittlung des Ortes der Vorrichtung (1) umfasst,
- der Sender unabhängig von der Aussendung des Notsignals, das eine Ortsangabe der Vorrichtung umfasst, in regelmäßigen oder unregelmäßigen Abständen ein Meldesignal aussendet, das eine Information über den momentanen Ort der Vorrichtung (1) übermittelt.

2. Vorrichtung (1) nach Anspruch 1, **dadurch gekennzeichnet, dass** der Sender das Meldesignal in regelmäßigen oder unregelmäßigen Zeitabständen aussendet

3. Vorrichtung (1) nach einem der vorhergehenden Ansprüche, **dadurch gekennzeichnet, dass** die Vorrichtung (1) eine Antenne und eine Signaleinheit umfasst.

4. Vorrichtung (1) nach einem der vorhergehenden Ansprüche, **dadurch gekennzeichnet, dass** die Vorrichtung (1) durch Aussendung des Meldesignals mit einer Zentralen Empfangseinheit ständig oder quasiständig in Funkverbindung steht.

5. Vorrichtung (1) nach einem der vorhergehenden Ansprüche, **dadurch gekennzeichnet, dass** der Sender eine Mobilfunkschnittstelle, insbesondere ein GSM-Modul, aufweist.

6. Vorrichtung (1) nach einem der vorhergehenden Ansprüche, **dadurch gekennzeichnet, dass** die Ortungsmittel ein GPS-Modul umfassen.

7. Vorrichtung (1) nach einem der vorhergehenden Ansprüche, **dadurch gekennzeichnet, dass** die Ortungsmittel einen Kreisel, insbesondere einen Kreiseltheodoliten, umfassen.

8. Vorrichtung (1) nach einem der vorhergehenden Ansprüche, **dadurch gekennzeichnet, dass** die Ortungsmittel eine das geomagnetische Feld messende Messvorrichtung umfassen.

9. Vorrichtung (1) nach einem der vorhergehenden Ansprüche, **dadurch gekennzeichnet, dass** die das geomagnetische Feld messende Messvorrichtung ein SQUID (supraconducting quantum interference device) ist oder eine auf dem Hall-Effekt beruhtende Messvorrichtung ist.

10. Vorrichtung (1) nach einem der vorhergehenden Ansprüche, **dadurch gekennzeichnet, dass** das Befestigungsmittel (2, 3) bandartig oder kettenartig ist und einen Verschluss aufweist.

11. Vorrichtung (1) nach einem der vorhergehenden Ansprüche, **dadurch gekennzeichnet, dass** das Befestigungsmittel (2, 3) im wesentlichen ein umlaufendes Band oder eine umlaufende Kette aus einem harten und zähen Material, vorzugsweise Federstahl, ist.

12. Vorrichtung (1) nach einem der vorhergehenden Ansprüche, **dadurch gekennzeichnet, dass** das Befestigungsmittel (2, 3) durch ein Schmuckstück gebildet ist.

13. Vorrichtung (1) nach einem der vorhergehenden Ansprüche, **dadurch gekennzeichnet, dass** das Befestigungsmittel (2, 3) durch das Armband einer Armbanduhr gebildet ist.

14. Vorrichtung (1) nach einem der vorhergehenden Ansprüche, **dadurch gekennzeichnet, dass** das geschlossene Befestigungsmittel (2, 3) einen geschlossenen Stromkreis aufweist, wobei eine unautorisierte Trennung des Stromkreises einer unautorisierten Öffnung des Befestigungsmittels (2, 3) entspricht

15. Vorrichtung (1) nach einem der vorhergehenden Ansprüche, **dadurch gekennzeichnet, dass** das Befestigungsmittel (2, 3) ein erstes, ein Magnetfeld erzeugendes oder einen Permanentmagneten aufweisendes Verschlussteil umfasst und dass das Befestigungsmittel (2, 3) ein zweites, ein Magnetfeld detektierendes Verschlussteil umfasst, wobei einer unautorisierten Nichtdetektion des Magnetfeldes eine unautorisierte Öffnung des Befestigungsmittels (2, 3) entspricht.

16. Vorrichtung (1) nach einem der vorhergehenden Ansprüche, **dadurch gekennzeichnet, dass** das erste und/oder zweite Verschlussteil Elemente der seltenen Erden, insbesondere Lanthanide, aufweist, wobei die DetektionlNichtdetektion des Magnetfeldes Ober die Aufspalturig/Nichiaufspaltung der Spektrallinien erfolgt.

17. Vorrichtung (1) nach einem der vorhergehenden Ansprüche, **dadurch gekennzeichnet, dass** eine abnorme Öffnung des Befestigungsmittels (2, 3) einer Öffnung ohne vorausgehendes Öffnungssignal entspricht

18. Vorrichtung (1) nach einem der vorhergehenden Ansprüche, **dadurch gekennzeichnet, dass** die Ortungsmittel und der Sender zu einer Einheit zusammengefasst sind.

19. Vorrichtung (1) nach einem der vorhergehenden Ansprüche, **dadurch gekennzeichnet, dass** in dem Befestigungsmittel die Antenne zumindest teilweise integriert ist.

20. Verfahren zum Betrieb einer Vorrichtung (1) nach einem der vorhergehenden Ansprüche, wobei die Vorrichtung (1) am Körper einer Person mittels eines Befestigungsmittels (2, 3) durch Schließen eines Verschlusses befestigt wird, wobei die Vorrichtung (1) einen Sender aufweist, wobei von dem Sender ein Notsignal an eine zentrale Empfangseinheit ausgesendet wird, wenn das Befestigungsmittel (2, 3) unautorisiert geöffnet wird, **dadurch gekennzeichnet, dass** von dem Sender unabhängig von der Aussendung des Notsignals ein Meldesignal ausgesendet wird.

21. Verfahren nach Anspruch 20, **dadurch gekennzeichnet, dass** das Meldesignal in regelmäßigen oder unregelmäßigen Zeitabständen ausgesendet wird.

22. Verfahren nach Anspruch 20 oder 21, **dadurch gekennzeichnet, dass** der Nichtempfang des Meldesignals von der zentralen Empfangseinheit als Notsignal interpretiert wird.

## Claims

1. A personal locating and protection device (1), wherein the device (1) comprises a transmitter, wherein the device (1) comprises fastening means (2, 3) that can be opened and closed and serve for fastening the device on the body of the person, and wherein the transmitter transmits an emergency signal if the fastening means (2, 3) are opened without authorization,
**characterized in that**
- the device (1) comprises locating means for determining the location of the device (1), and
- the transmitter transmits a status signal within regular or irregular intervals independently of the transmission of the emergency signal that contains information on the location of the device, wherein the status signal contains information on the instantaneous location of the device (1).

2. The device (1) according to Claim 1, **characterized in that** the transmitter transmits the status signal within regular or irregular intervals.

3. The device (1) according to one of the preceding claims, **characterized in that** the device (1) comprises an antenna and a signaling unit.

4. The device (1) according to one of the preceding claims, **characterized in that** the device (1) is in constant or quasi-constant radio contact with the central receiving unit due to the transmission of the status signal.

5. The device (1) according to one of the preceding claims, **characterized in that** the transmitter features a mobile communications interface, particularly a GSM module.

6. The device (1) according to one of the preceding claims, **characterized in that** the locating means comprise a GPS module.

7. The device (1) according to one of the preceding claims, **characterized in that** the locating a means comprise a gyroscope, particularly a theodolite gyroscope.

8. The device (1) according to one of the preceding claims, **characterized in that** the locating means comprise a measuring device that measures the geomagnetic field.

9. The device (1) according to one of the preceding claims, **characterized in that** the measuring device for measuring the geomagnetic field consists of a SQUID (supraconducting quantum interference device) or a measuring device that is based on the Hall effect.

10. The device (1) according to one of the preceding claims, **characterized in that** the fastening means (2, 3) are realized in a band-like or chain-like fashion and feature a closure.

11. The device (1) according to one of the preceding claims, **characterized in that** the fastening means (2, 3) essentially consist of a closed band or a closed chain of a hard and tough material, preferably spring steel.

12. The device (1) according to one of the preceding claims, **characterized in that** the fastening means (2, 3) consist of a piece of jewelry.

13. The device (1) according to one of the preceding claims, **characterized in that** the fastening means (2, 3) consist of the wristband of a wrist watch.

14. The device (1) according to one of the preceding claims, **characterized in that** the closed fastening means (2, 3) form a closed circuit, wherein an unauthorized interruption of the circuit corresponds to the unauthorized opening of the fastening means (2, 3) .

15. The device (1) according to one of the preceding claims, **characterized in that** the fastening means (2, 3) comprise a first closure element that generates a magnetic field or contains a permanent magnet, and **in that** the fastening means (2, 3) comprise a second closure element that detects a magnetic field, wherein an unauthorized non-detection of the magnetic field corresponds to the unauthorized opening of the fastening means (2, 3).

16. The device (1) according to one of the preceding claims, **characterized in that** the first and/or the second closure element contain elements of rare earths, particularly lanthanides, wherein the detection/non-detection of the magnetic field is realized by splitting/not splitting the spectral lines.

17. The device (1) according to one of the preceding claims, **characterized in that** an abnormal opening of the fastening means (2, 3) corresponds to the opening thereof without a prior opening signal.

18. The device (1) according to one of the preceding claims, **characterized in that** the locating means and the transmitter are combined into one unit.

19. The device (1) according to one of the preceding claims, **characterized in that** an antenna is at least partially integrated into the fastening means.

20. A method for operating a device (1) according to one of the preceding claims, wherein the device (1) is fastened on the body of a person with fastening means (2, 3), namely by closing a closure of the fastening means, wherein the device (1) features a transmitter, and wherein an emergency signal can be transmitted from the transmitter to a central receiving unit if the fastening means (2, 3) are opened without authorization, **characterized in that** the transmitter transmits a status signal independently of the transmission of the emergency signal.

21. The method according to Claim 20, **characterized in that** the status signal is transmitted within regular or irregular time intervals.

22. The method according to Claim 20 or 21, **characterized in that** the non-reception of the status signal is interpreted as an emergency signal by the central receiving unit.

## Revendications

1. Dispositif (1) de recherche et de protection d'une personne, ce dispositif (1) comprenant un émetteur, ce dispositif (1) comprenant un moyen de fixation (2, 3) pouvant être fermé de manière réversible pour le fixer au corps de la personne, l'émetteur envoyant un signal d'urgence lorsque le moyen de fixation (2, 3) est ouvert sans autorisation, **caractérisé en ce que**
- le dispositif (1) comprend un moyen de localisation pour déterminer la localisation du dispositif (1),
- l'émetteur, indépendamment de l'envoi du signal d'urgence contenant une indication de localisation du dispositif, émet à intervalles réguliers ou irréguliers un signal d'annonce qui transmet une information sur la localisation momentanée du dispositif (1).

2. Dispositif (1) selon la revendication 1, **caractérisé en ce que** l'émetteur envoie le signal d'annonce à intervalles réguliers ou irréguliers.

3. Dispositif (1) selon une des revendications précédentes, **caractérisé en ce que** le dispositif (1) comprend une antenne et une unité de signaux.

4. Dispositif (1) selon une des revendications précédentes, **caractérisé en ce que** le dispositif (1), par l'envoi du signal d'annonce, est en permanence ou quasiment en permanence en liaison radio avec une unité de réception centrale.

5. Dispositif (1) selon une des revendications précédentes, **caractérisé en ce que** l'émetteur comporte une interface radio mobile, notamment un module GSM.

6. Dispositif (1) selon une des revendications précédentes, **caractérisé en ce que** les moyens de localisation comprennent un module GPS.

7. Dispositif (1) selon une des revendications précédentes, **caractérisé en ce que** les moyens de localisation comprennent un gyroscope, notamment un théodolite à gyroscope.

8. Dispositif (1) selon une des revendications précédentes, **caractérisé en ce que** les moyens de localisation comprennent un dispositif de mesure mesurant le champ géomagnétique.

9. Dispositif (1) selon une des revendications précédentes, **caractérisé en ce que** le dispositif de mesure mesurant le champ géomagnétique est un SQUID (dispositif d'interférence à quantum supraconducteur pour « supraconducting quantum interference device ») ou est un dispositif de mesure reposant sur l'effet Hall.

10. Dispositif (1) selon une des revendications précédentes, **caractérisé en ce que** le moyen de fixation (2, 3) est en forme de bande ou de chaîne et comporte une fermeture.

11. Dispositif (1) selon une des revendications précédentes, **caractérisé en ce que** le moyen de fixation (2, 3) est substantiellement une bande périphérique ou une chaîne périphérique en matière dure et ductile, de préférence de l'acier à ressort.

12. Dispositif (1) selon une des revendications précédentes, **caractérisé en ce que** le moyen de fixation (2, 3) est constitué d'une pièce décorative.

13. Dispositif (1) selon une des revendications précédentes, **caractérisé en ce que** le moyen de fixation (2, 3) est constitué par le bracelet d'une montre-bracelet.

14. Dispositif (1) selon une des revendications précédentes, **caractérisé en ce que** le moyen de fixation fermé (2, 3) comprend un circuit de courant fermé, une séparation non autorisée du circuit de courant correspondant à une ouverture non autorisée du moyen de fixation (2, 3).

15. Dispositif (1) selon une des revendications précédentes, **caractérisé en ce que** le moyen de fixation (2, 3) comprend une première pièce de fermeture générant un champ magnétique ou comportant un aimant permanent et que le moyen de fixation (2, 3) comprend une deuxième pièce de fermeture détectant un champ magnétique, une non-détection non autorisée du circuit de courant correspondant à une ouverture non autorisée du moyen de fixation (2, 3).

16. Dispositif (1) selon une des revendications précédentes, **caractérisé en ce que** la première et/ou deuxième pièce de fermeture comprend des éléments de terres rares, notamment de la lanthanide, la détection/non-détection du champ magnétique étant faite par la dissociation/non-dissociation des lignes spectrales.

17. Dispositif (1) selon une des revendications précédentes, **caractérisé en ce qu'**une ouverture anormale du moyen de fixation (2, 3) correspond à une ouverture sans signal d'ouverture préalable.

18. Dispositif (1) selon une des revendications précédentes, **caractérisé en ce que** les moyens de localisation et l'émetteur sont regroupés en une unité.

19. Dispositif (1) selon une des revendications précédentes, **caractérisé en ce que** l'antenne est intégrée du moins partiellement dans le moyen de fixation.

20. Procédé d'utilisation d'un dispositif (1) selon une des revendications précédentes, ce dispositif (1) étant fixé au corps d'une personne à l'aide d'un moyen de fixation (2, 3) en fermant une fermeture, ce dispositif (1) comportant un émetteur, un signal d'urgence étant envoyé par l'émetteur à une unité de réception centrale lorsque le moyen de fixation (2, 3) est ouvert sans autorisation, **caractérisé en ce qu'**un signal d'annonce est envoyé par l'émetteur indépendamment de l'envoi du signal d'urgence.

21. Procédé selon la revendication 20, **caractérisé en ce que** le signal d'annonce est émis à intervalles réguliers ou irréguliers.

22. Procédé selon la revendication 20 ou 21, **caractérisé en ce que** la non-réception du signal d'annonce par l'unité de réception centrale est interprétée comme un signal d'urgence.
